Europäisches Patentamt

European Patent Office

Office européen des brevets

(19)

(11) **EP 0 986 432 B1**

(12) **EUROPEAN PATENT SPECIFICATION**

(45) Date of publication and mention
of the grant of the patent:
**26.01.2005 Bulletin 2005/04**

(21) Application number: **98925979.1**

(22) Date of filing: **29.05.1998**

(51) Int Cl.⁷: **B01D 53/52**, C01B 17/05

(86) International application number:
**PCT/NL1998/000312**

(87) International publication number:
**WO 1998/055209 (10.12.1998 Gazette 1998/49)**

(54) **METHOD AND SYSTEM FOR SELECTIVE REMOVAL OF CONTAMINATION FROM GAS FLOWS**

VERFAHREN UND ANLAGE ZUR SELEKTIVEN BESEITIGUNG VON VERUNREINIGUNG AUS GASSTRÖMEN

PROCEDE ET SYSTEME SERVANT A EFFECTUER LA SUPPRESSION SELECTIVE DE CONTAMINANTS HORS DE FLUX GAZEUX

(84) Designated Contracting States:
**AT BE CH CY DE DK ES FI FR GB GR IE IT LI LU MC NL PT SE**

(30) Priority: **02.06.1997 NL 1006200**

(43) Date of publication of application:
**22.03.2000 Bulletin 2000/12**

(73) Proprietor: **Procede Twente BV
7531 JB Enschede (NL)**

(72) Inventors:
• **VERSTEEG, Geert, Frederik
NL-7531 JB Enschede (NL)**
• **TER MAAT, Hendrik
NL-7462 LN Rijssen (NL)**

(74) Representative: **Duxbury, Stephen
Arnold & Siedsma,
Sweelinckplein 1
2517 GK Den Haag (NL)**

(56) References cited:
EP-A- 0 628 339            DE-A- 2 304 497
DE-A- 3 300 402            FR-A- 1 225 628
US-A- 4 192 854            US-A- 4 202 864
US-A- 5 147 620

**Description**

The present invention relates to a method for removal of contaminants from gas flows, in particular the selective removal of sulphur and sulphur-containing compounds from gas flows. The invention further relates to a system of equipment for performing this process and to a process and system comprising this process, whereby sulphuric acid and/or sulphur dioxide is provided.

Many industrial gases are contaminated with hydrogen sulphide ($H_2S$). The presence of $H_2S$ makes the direct application and/or use of these gases (for instance) natural gas, coal gas or biogas (impossible or at the very least) very hazardous. $H_2S$ must be removed because it is extremely toxic, causes environmental pollution after combustion and produces problems, for instance catalyst poisoning, in subsequent industrial processes. This means that a gas cleaning step is necessary to remove $H_2S$ in advance, before the resulting gases can be used.

DE-A-33 00 402 discloses a process for the removal of $H_2S$ using an aqueous acidic culture medium in which micro-organisms grow. These micro-organisms are used for the conversion of the metal sulphide into sulphate. The excess of formed sulphate may be removed by precipitation. Due to the use of micro-organisms, the aqueous absorption medium has a particular composition dictated by the growth conditions of the micro-organism. The composition of the absorption medium is indicated in page 10 of D2.

US-A-4 192 854 relates to a process for removing $H_2S$ and ammonia from gas streams using a solution comprising copper sulphate and ammonium sulphate. Recycled is copper sulphate and from this process is removed ammonium sulphate and metal sulphur. Furthermore, this process requires the addition of ammonium sulphate for maintaining the pH in a desired range.

DE-A-23 04 497 relates to a process for removing $H_2S$ from gas streams in which is required the use of a copper sulphate solution which comprises in addition chlorine or bromine ions required for the oxidation of the formed copper sulphide into elemental sulphur.

US-A-5 147 620 relates to a process for the purification of a gas stream in which $H_2S$ is absorbed in an aqueous solution of acidic copper nitrate. In the regeneration of the absorption solution, nitrogen dioxide and elemental sulphur are formed, nitrogen dioxide is subsequently converted into nitric acid.

The object of the present invention is to provide an improved process for the removal of contaminants from gas flows.

According to a first aspect of the present invention, there is provided a method for the selective removal of undesired contamination in the form of sulphur and/or sulphur-containing compounds from gas flows, according to claim 1.

In the method according to the present invention the hazardous and undesired contaminants can thus be selectively precipitated, wherein substantially no other gas components react together with the metal ion, whereby a very efficient system is provided.

The inventors have demonstrated that the concentrations of $S^{2-}$ and $CO_3^{2-}$ in the liquid phase are dependent on the pH, wherein a good selective removal of $S^{2-}$ relative to $CO_3^{2-}$, in particular occurs with a pH of less than 7, i.e. wherein the method selectivity is enhanced.

Furthermore the inventors have shown that by carrying out the process at a pH above about -0.05, preferably 0.0, other metal salts are substantially not precipitated out of the gas flow at the expense of the metal sulphide, i.e. wherein the method performance is enhanced.

The inventors have accordingly demonstrated that via the method according the present invention, sulphur-containing compounds can be removed in a selective manner in relation to substantially non-hazardous gas components.

The metal ion is chosen such that the corresponding metal sulphide thereof is substantially non-soluble, wherein the metal is chosen from the group consisting of Zn, Fe, Cu, wherein the metal ion is placed in contact with the gas flow in the form of an aqueous metal sulphate solution.

When an aqueous solution containing $CuSO_4$ is placed in contact with for instance an $H_2S$-containing gas, the following reactions occur:

$$H_2S(g) \Leftrightarrow H_2S(L)$$

$$H_2S(L) + H_2O \Leftrightarrow HS^- + H_3O^+$$

$$HS^- + H_2O \Leftrightarrow S^{2-} + H_3O^+$$

$$Cu^{2+} + S^{2-} \Leftrightarrow CuS\leftarrow$$

When the metal sulphide is very poorly soluble, these reactions can be considered practically irreversible, whereby a very effective $H_2S$ removal process is realized. Since the metal sulphide is chosen because it is very poorly soluble, a process efficiency decrease in the pH will substantially not occur because in solution the metal ions are virtually wholly consumed.

A very good removal of sulphur-containing compounds from gas flows is obtained with copper sulphate.

In the case of copper sulphate, the pH is preferably maintained in a range of between 0.25 and 7.0, since below about 0.25, solid copper sulphate may be precipitated at the expense of the metal sulphide. Furthermore, when using copper sulphate, the pH, on initially placing the gas flow in contact with the aqueous copper sulphate is preferably about 4.0 or above in order to provide a good efficiency.

When the gas flow contains COS, it may be subjected to an initial or simultaneous step of hydrolysing COS $\rightarrow H_2S + CO_2$, whereafter the $H_2S$ can be removed as above. In this way, COS can be very effectively removed from the gas stream.

When for instance the metal ion is zinc, a pH of 6 or less, preferably 5 or less and most preferably in the range between 0.23 and 4.37 pH can be used in order to remove $H_2S$ from the gas flow in very selective manner relative to $CO_2$.

When the metal ion is for instance iron, a pH of about 6.7 or less can be chosen in order to provide a very good removal of $H_2S$, and can lie between about 2.5 to 4.5 if a very good removal of $H_2S$ relative to $CO_2$ is desired.

In addition, unused metal salt solution is also fed back into the process wherein, before feedback of this unused metal salt solution, it can be supplied with an additional metal ion.

The acid formed during the precipitation of the metal sulphide is preferably neutralized in order to cause the process to run well.

The metal sulphate solution is preferably supplied by means of one or more of the following steps of:

i) dissolving the metal by means of an electric current.
    Situated in the make-up unit, for instance, are a metal electrode and an inert electrode. These are connected to a circuit.
ii) adding metal sulphate and neutralizing the acid separately.
iii) dissolving a metal oxide or hydroxide, for instance dissolving $Me(OH)_2$.

During these steps sulphuric acid produced during the process is consumed while metal is solubilized.

According to a second aspect, the present invention relates to a system of equipment for performing the above stated method as defined in claim 13. This system of equipment may be provided for providing sulphuric acid.

The present invention will now be described with reference to the description and figures hereinbelow.

Theoretical background of the chemistry of the method according to the present invention

It is known that the sulphides of the metals zinc, iron, copper, silver, lead, cadmium, cobalt, magnesium, manganese, nickel and tin are very poorly soluble. Use can be made hereof for the removal of $H_2S$ from gas flows. A sample reaction is:

$$Zn^{2+} + S^{2-} \Leftrightarrow ZnS \tag{1}$$

The overall reaction, including the dissociation of $H_2S$ is:

$$Zn^{2+} + H_2S + 2\,H_2O \Leftrightarrow ZnS\downarrow + 2\,H_3O^+ \tag{2}$$

A reaction wherein $H_2S$ reacts with $Zn^{2+}$ with the formation of zinc sulphide and acid.

Liquid equilibriums

When $H_2S$ or $CO_2$ is dissolved in water, it behaves as a divalent acid. $H_2S$, $HS^-$, $S^{2-}$, $CO_2$, $HCO_3$ and $CO_3^{2-}$ will be present in the solution. The following equilibrium reactions will occur. The equilibrium constants of these reactions are given at 25°C ($K_w$, $K_3$, $K_4$) or 18°C ($K_1$ and $K_2$).

$$2H_2O \Leftrightarrow H_3O^+ + OH^- \qquad K_W = [H_3O^+]*[OH^-] = 10^{-14} \qquad (3)$$

$$H_2S + H_2O \Leftrightarrow H_3O^+ + HS^- \qquad K_1 = \frac{[H_3O^+] * [HS^-]}{[H^2S]} = 9.1 \cdot 10^{-8} \qquad (4)$$

$$HS^- + H_2O \Leftrightarrow H_3O^+ + S^{2-} \qquad K_2 = \frac{[H_3O^+] * [S^{2-}]}{[HS^-]} = 1.1 \cdot 10^{-12} \qquad (5)$$

$$CO_2 + 2H_2O \Leftrightarrow H_3O^+ + HCO_3^- \qquad K_3 = \frac{[H_3O^+] * [HCO_3^-]}{[CO_2]} = 4.3 \cdot 10^{-7} \qquad (6)$$

$$HCO_3^- + H_2O \Leftrightarrow H_3O^+ + CO_3^{2-} \qquad K_3 = \frac{[H_3O^+] * [HCO_3^{2-}]}{[HCO_3^-]} = 5.6 \cdot 10^{-11} \qquad (7)$$

Precipitation equilibriums

When a metal is now present in ion form in the solution, the following precipitation reaction can occur if the solubility product $K_{sp}$ is exceeded.

$$m\, M^{n+} + nX^{m-} \Leftrightarrow p\, M_{m/p}X_{n/p} \qquad K_{sp} = \sqrt[p]{[M^{n+}]^m * [X^{m-}]^n} \qquad (8)$$

The driving force for this reaction $\Delta G_r$ (The difference in Gibbs energy between starting substance and products) can be calculated with:

$$\Delta G_r = RT \cdot \ln\left[ \frac{K_{sp}}{\sqrt[p]{[M^{n+}]^m * [X^{m-}]^n}} \right] \qquad (9)$$

Table 1 shows the solubility product $K_{sp}$ at 25°C (4) for a number of combinations of anions and metals on which the research will be further concentrated.

**Table 1.   solubility products**

| $M^{n+}$ | $X^{m-}$ | | |
|---|---|---|---|
| | $S^{2-}$ | $CO_3^{2-}$ | $OH^-$ |
| $Fe^{2+}$ | $1.6*10^{-19}$ (FeS) | $3.1*10^{-11}$ ($FeCO_3$) | $4.9*10^{-17}$ $Fe(OH)_2$ |
| $Zn^{2+}$ | $2.9*10^{-25}$ (ZnS) | $1.2*10^{-10}$ ($ZnCO_3$) | $4.1*10^{-17}$ $Zn(OH)_2$ |
| $Cu^{2+}$ | $1.3*10^{-36}$ (CuS) | | |

For $CuCO_3$ and $Cu(OH)_2$ solubilities are known of 0.03 wt% respectively 0.0059 g/l at 20°C.

Using the foregoing, it is possible to calculate whether the precipitation reaction represented in reaction equation (8) can take place. Using as example a gas composition of 10 volume ppm $H_2S$ and 30 volume % $CO_2$ and assuming that, gas and liquid phase are in mutual equilibrium the concentrations of $S^{2-}$ and $CO_3^{2-}$ can be calculated using equation (3) to (7).

Surprisingly, the inventors have found that these concentrations are shown to be greatly dependent on the pH.

When the concentration $[M^{n+}]$ is set at 1 mol/l, it is possible to calculate using (9) whether the precipitation reaction (8) can take place ($\Delta G_r < 0$).

Precipitation reactions of copper and zinc

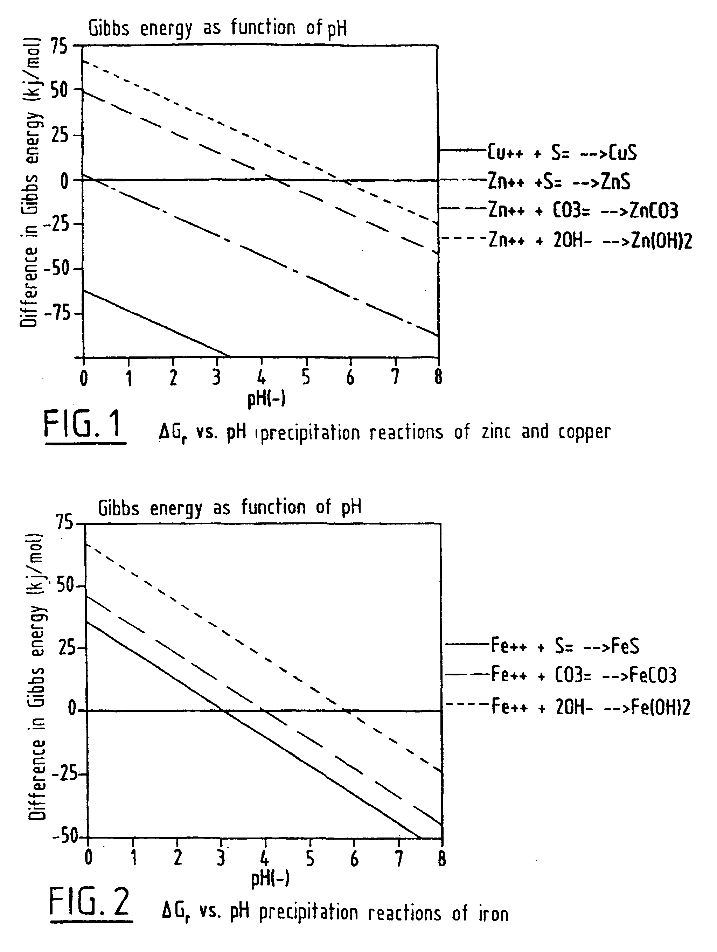

In Figure 1 the $\Delta G_r$ is shown as a function of the pH of the reactions which result in the formation of copper (II)sulphide, zinc(II)sulphide zinc(II)carbonate and zinc(II)hydroxide.

Conclusions:

On the basis of the above stated starting points, it is found that

- copper sulphide can always be formed
- zinc sulphide can be formed if the pH is higher than 0.23
- zinc carbonate can be formed if the pH is higher than 4.37
- zinc hydroxide can be formed if the pH is higher than 5.80

If 0.23<pH<4.37 it is found that zinc sulphide can result, but not zinc carbonate.

Precipitation reactions of iron

In Figure 2 the $\Delta G_r$ is shown as a function of the pH of the reactions which result in the formation of iron(II) sulphide, iron(II)carbonate and iron (II) hydroxide.

Conclusions:

On the basis of the above stated starting points, it is found that
iron sulphide can be formed if the pH is higher than 3.10
iron carbonate can be formed if the pH is higher than 4.03
iron hydroxide can be formed if the pH is higher than 5.85

If 3.10<pH<4.03 it is found that iron sulphide can result, but not iron carbonate.

**Experimental**

A number of experiments were performed with metal sulphates, with copper sulphate, iron sulphate and zinc sulphate. Experiments were performed in order to study the precipitation reactions with $H_2S$ (sulphide) and $CO_2$ (carbonate). A reference experiment with caustic soda was also performed.

Experiment 1

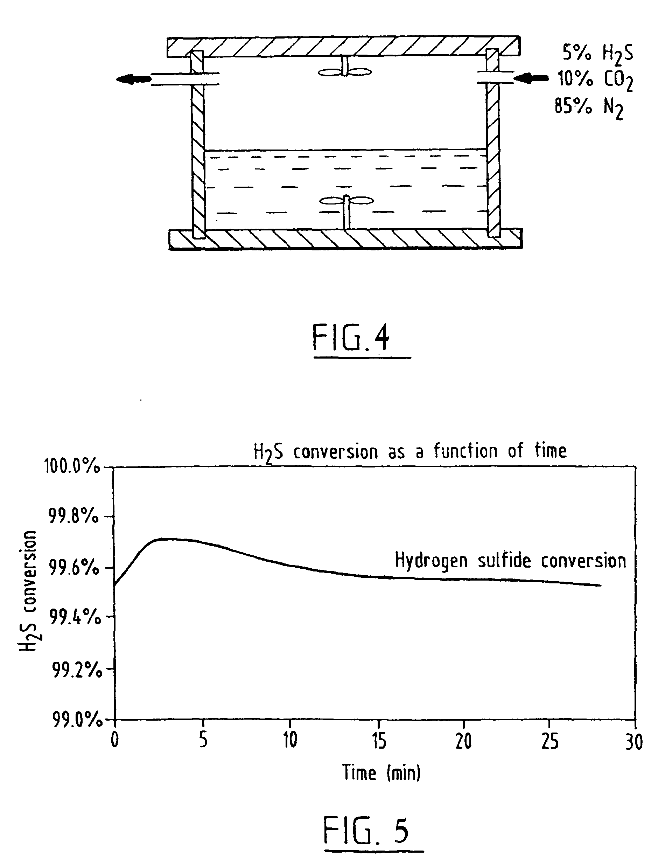

300 ml aqueous solution of 74.9 gram of $CuSO_4.5H_2O$ were brought into the stirred cell. The temperature of the cell was kept constant at 20°C. A gas stream of 3.5 ml/s containing 5 vol% $H_2S$, 10 vol% $CO_2$, balance nitrogen was applied to the reactor. Both gas and liquid phase in the reactor were continuously stirred. Measurements of the $H_2S$ and $CO_2$ concentrations and the total gas volume flow at the exit of the reactor showed that (see also figure 5):

- More than 99% of all hydrogen sulfide applied to this specific reactor is absorbed by the copper sulfate solution
- In steady state condition no absorption of carbon dioxide occurred.

An overview of calculated pH values assuming ideal behavior of the solution and a dissociation constant ($pK_a$) of 1.9 for the second dissociation step of sulfuric acid yields the following table of pH's as a function of time during the experiment.

| Time (min) | pH |
|---|---|
| 2 | 4.18 |
| 16 | 3.25 |
| 26 | 3.03 |

Experiment 1 demonstrated that hydrogen sulfide can be selectively and to a substantial degree be removed from a gas stream containing carbon dioxide using a washing liquor containing metal ions.

Experiment 2

300 ml aqueous solution of 7.5 gram of $CuSO_4.5H_2O$ was brought into the stirred cell. The temperature of the cell was kept constant at 20°C. A gas stream of 3.5 ml/s, 10 vol% $CO_2$, balance nitrogen was applied to the reactor. When a steady state condition was reached the experiment was started:

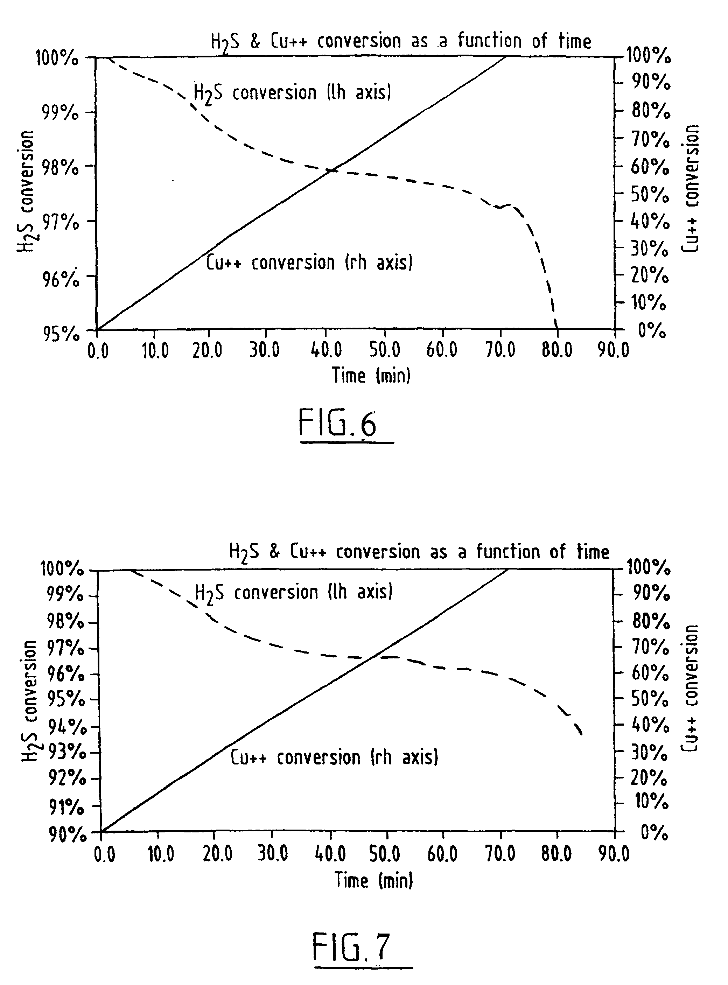

A gas stream of 3.5 ml/s containing 5 vol% $H_2S$, 10 vol% $CO_2$, balance nitrogen was applied to the reactor. Both gas and liquid phase in the reactor were continuously stirred. Measuring the $H_2S$ and $CO_2$ concentrations and the total gas volume flow at the exit of the reactor showed that (see also figure 6):

• More than 97% of all hydrogen sulfide applied to this specific reactor was absorbed by the acidified cupric sulfate solution. When the cupric sulfate solution is depleted the hydrogen sulfide conversion in the reactor drops dramatically
• During the entire experiment no absorption of carbon dioxide was observed.

An overview of calculated pH values assuming ideal behavior of the solution and a dissociation constant ($pK_a$) of 1.9 for the second dissociation step of sulfuric acid yields the following table of pH's as a function of time during the experiment.

| Time (min) | pH |
|---|---|
| 2 | 3.10 |
| 6 | 2.68 |
| 10 | 2.41 |
| 20 | 1.99 |
| 40 | 1.43 |
| 66 | 1.02 |
| 70 | 0.97 |

This demonstrated that hydrogen sulfide can be selectively and to a substantial degree be removed from a gas stream containing carbon dioxide using a washing liquor containing metal ions, even at very low metal ion concentrations.

Experiment 3

300 ml aqueous solution of 7.5 gram of $CuSO_4.5H_2O$ and 30 grams of $H_2SO_4$ were brought into the stirred cell. The temperature of the cell was kept at 20°C. A gas stream of 3.5 ml/s, 10 vol% $CO_2$, balance nitrogen was applied to the reactor. When a steady state condition was reached the experiment was started:

A gas stream of 3.5 ml/s containing 5 vol% $H_2S$, 10 vol% $CO_2$, balance nitrogen was applied to the reactor. Both gas and liquid phase in the reactor were continuously stirred. Measuring the $H_2S$ and $CO_2$ concentrations and the total gas volume flow at the exit of the reactor showed that (see also figure 7):

• More than 96% of all hydrogen sulfide applied to this specific reactor was absorbed by the acidified cupric sulfate solution. When the cupric sulfate solution was depleted the hydrogen sulfide conversion in the reactor drops dramatically
• During the entire experiment no absorption of carbon dioxide occurred.

An overview of calculated pH values assuming ideal behavior of the solution and a dissociation constant ($pK_a$)

of 1.9 for the second dissociation step of sulfuric acid yields the following table of pH's as a function of time during the experiment.

| Time (min) | pH |
|---|---|
| 0 | 0.04 |
| 20 | 0.01 |
| 40 | -0.01 |
| 70 | -0.04 |

This demonstrated that hydrogen sulfide can be selectively and to a substantial degree be removed from a gas stream containing carbon dioxide using an acidified washing liquor containing metal ions, even at very low metal ion concentrations.

Experiment 4

300 ml aqueous solution of 7.5 gram of $CuSO_4.5H_2O$ and 30 grams of $H_2SO_4$ were brought into the stirred cell. The temperature of the cell was kept at 20°C. A gas stream of 3.5 ml/s, 10 vol% $CO_2$, balance nitrogen was applied to the reactor. When a steady state condition ($CO_{2out} = CO_{2in}$) was reached the experiment was started.

A gas stream of 3.5 ml/s containing 0.05 vol% $H_2S$, 10 vol% $CO_2$, balance nitrogen was applied to the reactor. Both gas and liquid phase in the reactor were continuously stirred. Measuring the $H_2S$ and $CO_2$ concentrations and the total gas volume flow at the exit of the reactor shows that (see also figure 2):

• More than 95% of all hydrogen sulfide applied to this specific reactor was absorbed by the acidified cupric sulfate solution.

An overview of calculated pH values assuming ideal behavior of the solution and a dissociation constant ($pK_a$) of 1.9 for the second dissociation step of sulfuric acid yields the following table of pH's as a function of time during the experiment.

| Time (min) | pH |
|---|---|
| 0 | 0.04 |
| 100 | 0.04 |

This demonstrated that hydrogen sulfide can be selectively and to a substantial degree be removed from a gas stream containing carbon dioxide using an acidified washing liquor containing metal ions, even at very low hydrogen sulfide concentrations.

Experiment 5

A control experiment with sodium hydroxide as washing liquor.

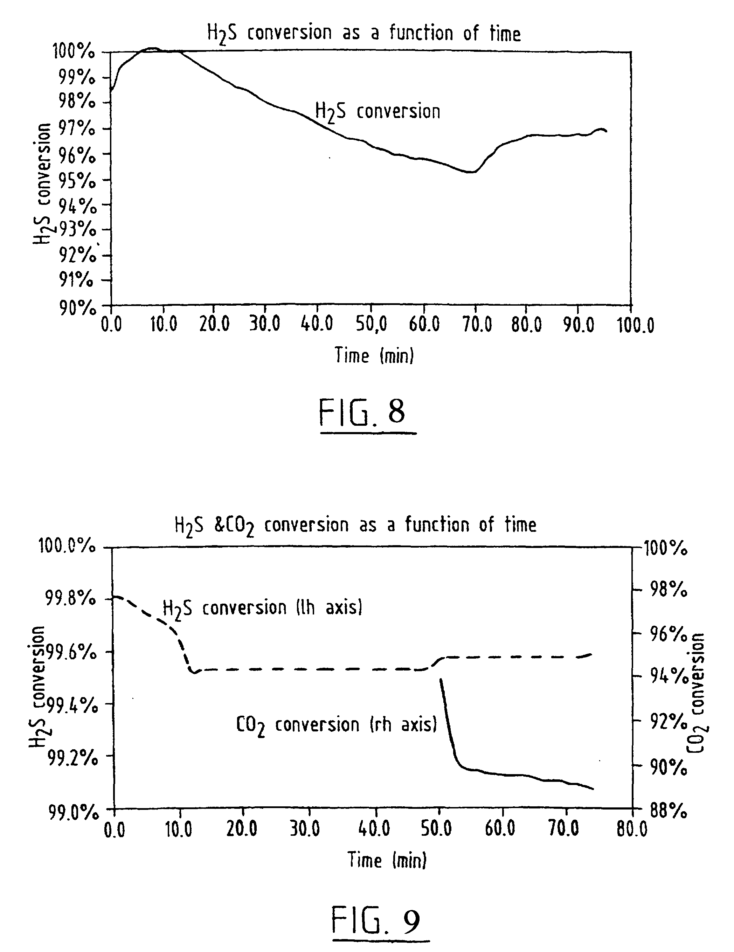

300 ml aqueous solution of 12 gram of NaOH was brought into the stirred cell. The temperature of the cell was kept at 20°C. A gas stream of 3.5 ml/s, 10 vol% $CO_2$, balance nitrogen was applied to the reactor. After 50 minutes the composition of the gas stream was changed to 5 vol% $H_2S$, 10 vol% $CO_2$, balance nitrogen. The total gas volume flow was not changed. Both gas and liquid phase in the reactor were continuously stirred. Measuring the $H_2S$ and $CO_2$ concentrations and the total gas volume flow at the exit of the reactor showed that (see also figure 9):

• More than 99% of all hydrogen sulfide applied to this specific reactor was absorbed by the sodium hydroxide solution.
• Approximately 90% of all carbon dioxide applied to this specific type of reactor was absorbed by the sodium hydroxide solution.

The pH value was, throughout the entire experiment between 14 and 13.95.

Experiment 6

Control experiment with metal sulfate solution as washing liquor.

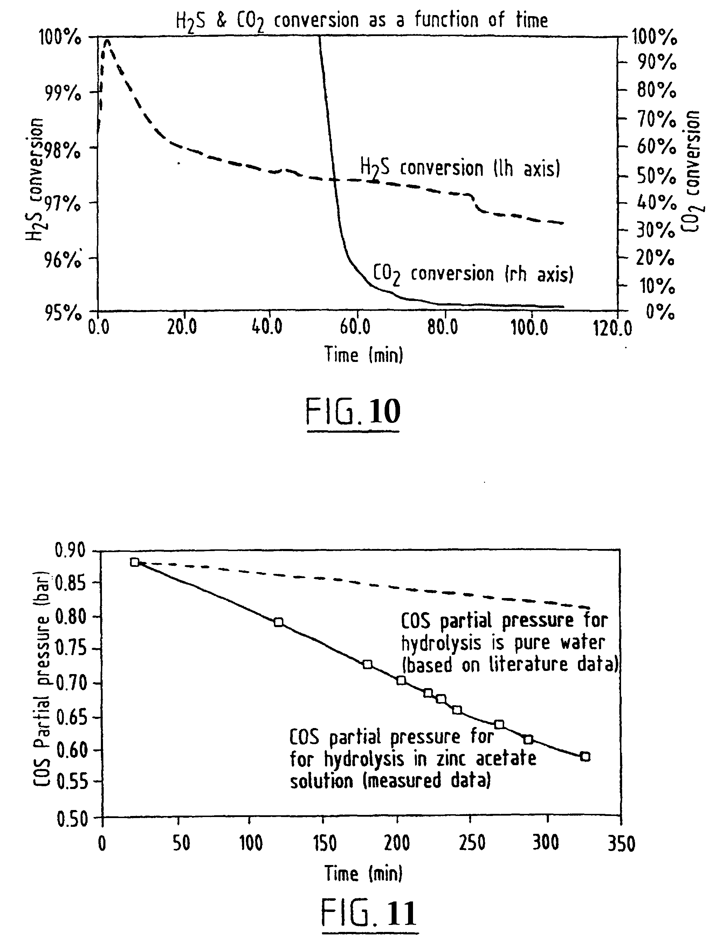

300 ml aqueous solution of 74.9 gram of $CuSO_4.5H_2O$ was brought into the stirred cell. The temperature of the cell was kept at 20°C. A gas stream of 3.5 ml/s, 10 vol% $CO_2$, balance nitrogen was applied to the reactor. After 50 minutes the composition of the gas stream was changed to 5 vol% $H_2S$, 10 vol% $CO_2$, balance nitrogen. The total gas volume flow was not changed. Both gas and liquid phase in the reactor were continuously stirred. Measuring the $H_2S$ and $CO_2$ concentrations and the total gas volume flow at the exit of the reactor showed that (see also figure 10):

- More than 96.5% of all hydrogen sulfide applied to the reactor is absorbed by the cupric sulfate solution.

An overview of calculated pH values assuming ideal behavior of the solution and a dissociation constant ($pK_a$) of 1.9 for the second dissociation step of sulfuric acid yields the following table of pH's as a function of time during the experiment.

| Time (min) | pH |
|---|---|
| 2 | 4.17 |
| 16 | 3.25 |
| 26 | 3.03 |
| 46 | 2.72 |
| 64 | 2.59 |
| 80 | 2.45 |
| 100 | 2.35 |

Experiment 7

300 ml aqueous solution of 3.0 gram of $ZnAc.2H_2O$ and 6.0 grams of ZnO were brought into the stirred cell. The temperature of the cell was kept at 20°C. After this all gasses were removed from the cell using a vacuum pump. Then the gas and the liquid phase of the cell were continuously stirred. The gas phase and the liquid phase of the cell were operated batchwise. Monitoring the degree of carbonyl sulfide conversion in time showed that (see also figure 11):

- The hydrolysis reaction of COS to $H_2S$ and $CO_2$ in aqueous solutions of zinc acetate takes place at a 4 to 5 times higher rate than the hydrolysis reaction of COS in pure water in an identical reactor keeping all other parameters constant.

This demonstrated that the hydrolysis of carbonyl sulfide to hydrogen sulfide and carbon dioxide in aqueous solutions can be substantially enhanced by the presence of zinc acetate in this solution.

Experiment 8

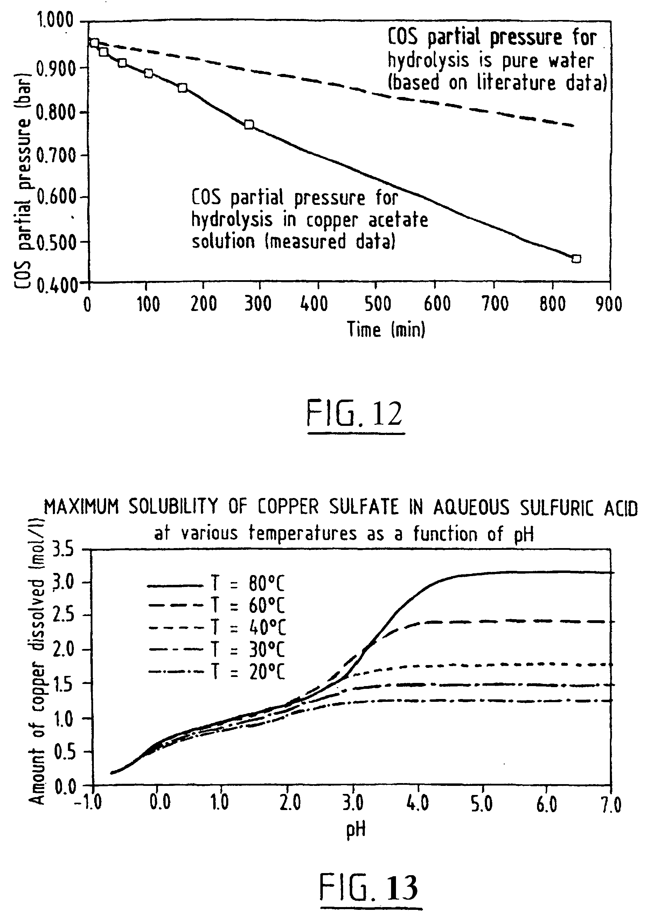

300 ml aqueous solution of 2.5 gram of $CuAc.2H_2O$ and 6.0 grams of CuO were brought into the stirred cell. The temperature of the cell was kept at 20°C. After this all gasses were removed from the cell using a vacuum pump. Then a predetermined amount of gaseous carbonyl sulfide was brought into the cell. The gas and the liquid phase of the cell were continuously stirred. The gas phase and the liquid phase of the cell were operated batchwise. Monitoring the degree of carbonyl sulfide conversion in time showed that (see also figure 12):

- The hydrolysis reaction of COS in aqueous solutions of copper acetate takes place at a 3 to 4 times greater rate than the hydrolysis reaction of COS in pure water in an identical reactor keeping all other parameters constant.

This demonstrated that the hydrolysis of carbonyl sulfide to hydrogen sulfide and carbon dioxide in aqueous solutions can be substantially enhanced by the presence of copper acetate in this solution.

The inventors have furthermore investigated the solubility of copper sulphate in aqueous sulphuric acid at various temperatures and as a function of pH, the results of which are shown in figure 13.

A graphical representation of the capacity of an cupric sulfate solution acidified with sulfuric acid vs acidity (pH) clearly shows a substantial reduction of the capacity of the solvent at two pH values.

1. at a pH of approximately 4
2. at a pH of approximately 0.25

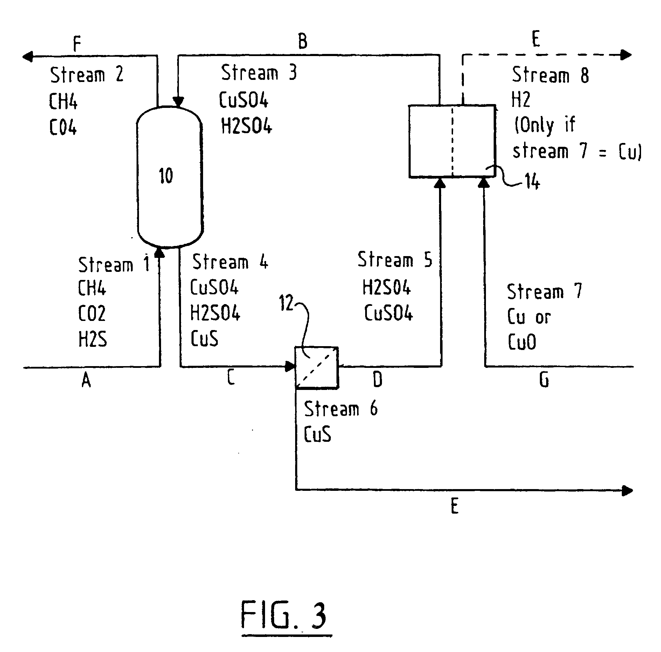

An embodiment (figure 3) of the system according to the present invention consists of a scrubber 10, a filter unit 12 and a make-up unit 14, wherein metal sulphate/sulphuric acid solution is processed to enable it to be fed back to scrubber 10.

In use the gas flow for cleaning (A) is guided into scrubber 10, wherein it encounters for instance a copper sulphate counterflow (B).

The copper sulphate/sulphuric acid solution (C) which leaves scrubber 10 is subsequently separated from copper sulphide in filter unit 12. This copper sulphate/sulphuric acid solution (flow D) is subsequently fed back to make-up unit 14. Here copper oxide (G) can be dissolved in the acid formed during the absorption step. In this latter case, hydrogen (flow E) is made.

The copper sulphide (flow E) leaving filter unit 12 can be converted into copper oxide.

The cleaned gas flow F is guided out of the scrubber.

## Claims

1. Method for selectively removing sulphur and/or sulphur containing contaminant compounds from a gas flow, which may also comprise $CO_2$, said method comprising the steps of:

   - placing the gas flow into contact with a metal sulphate solution wherein the metal is selected from copper, zinc and iron, at a pH lying in the range of between about -0.05 and about 7.0, wherein the metal sulphate solution and the contaminants react together in order to form solid metal sulphide which precipitates and aqueous sulphuric acid,
   - removing the solid metal sulphide from the gas flow contacted metal sulphate solution,
   - converting the solid metal sulphide into metal oxide,
   - dissolving the thus formed metal oxide in the metal sulfate/sulphuric acid solution obtained in the above removing step in order to regenerate metal sulphate, and then feeding the resulting solution to the gas flow contacting step.

2. Method according to claim 1 wherein the gas flow contains $H_2S$ and/or COS.

3. Method according to claim 1 or 2, wherein the metal sulphate is copper sulphate.

4. Method according to claim 3, wherein the pH range lies between about 0.0 and 7.0, preferably 0.25 and 7.0.

5. Method according to claim 4, wherein the pH range lies between about 0.25 and about 6.0.

6. Method according to claim 1-5, wherein the start pH on initially placing the gas flow in contact with the aqueous copper sulphate is about 4.0 or above.

7. Method according to any of the claims 1 or 2, wherein, when the metal comprises zinc, a pH of about 6 or less, preferably 5 or less is maintained.

8. Method as claimed in claim 7, wherein the pH lies in the range between 0.23 and about 4.37.

9. Method as claimed in any of the claims 1 or 2, wherein, when the metal comprises iron, a pH of about 6.7 or less is maintained, wherein the pH preferably lies in the range between about 2.5 and about 4.5.

10. Method as claimed in any of the foregoing claims, wherein a buffer is added.

11. Method according to any of the preceding claims further comprising an initial or simultaneous step of transforming COS in the gas flow to $H_2S$, by means of exposing the gas flow to a metal acetate solution, in particular being selected from the group consisting of zinc acetate and copper acetate.

12. Method as claimed in any of the foregoing claims, wherein sulphuric acid is provided.

13. System of equipment for performing the method as claimed in any of the foregoing claims, comprising:

   - a scrubber column in which the gas flow for cleaning can be brought into contact with a metal sulphate solution,

- a filter unit for separating precipitated metal sulphide, and a regeneration unit in which the metal sulphide can be regenerated into metal oxide.

14. System as claimed in claim 13 for providing sulphuric acid and/or sulphur dioxide.

## Patentansprüche

1. Verfahren zum selektiven Entfernen von Schwefel und/oder Schwefel-enthaltenden Verunreinigungsverbindungen aus einem Gasstrom, der auch $CO_2$ umfassen kann, wobei das Verfahren die Schritte umfaßt:

   - Kontaktieren des Gasstroms mit einer Metallsulfatlösung, wobei das Metall aus Kupfer, Zink und Eisen ausgewählt wird, bei einem pH, der im Bereich zwischen etwa -0,05 und etwa 7,0 liegt, wobei die Metallsulfatlösung und die Verunreinigungen miteinander reagieren, um festes Metallsulfid, welches präzipitiert, und wäßrige Schwefelsäure zu bilden,
   - Entfernen des festen Metallsulfids aus der Gasstromkontaktierten Metallsulfatlösung,
   - Umwandeln des festen Metallsulfids in Metalloxid,
   - Auflösen des so gebildeten Metalloxids in der im obigen Entfernungsschritt erhaltenen Metallsulfat/Schwefelsäure-Lösung, um Metallsulfat zu regenerieren, und dann Zuführen der resultierenden Lösung zum Gasstrom-Kontaktierschritt.

2. Verfahren gemäß nach Anspruch 1, wobei der Gasstrom $H_2S$ und/oder COS enthält.

3. Verfahren gemäß Anspruch 1 oder 2, wobei das Metallsulfat Kupfersulfat ist.

4. Verfahren gemäß Anspruch 3, wobei der pH-Bereich zwischen etwa 0,0 und 7,0, vorzugsweise 0,25 und 7,0 liegt.

5. Verfahren gemäß Anspruch 4, wobei der pH-Bereich zwischen etwa 0,25 und etwa 6,0 liegt.

6. Verfahren gemäß Anspruch 1-5, wobei der Anfangs-pH beim anfänglichen Kontaktieren des Gasstroms mit dem wäßrigen Kupfersulfat etwa 4,0 oder darüber ist.

7. Verfahren gemäß irgendeinem der Ansprüche 1 oder 2, wobei, wenn das Metall Zink enthält, ein pH von etwa 6 oder weniger, vorzugsweise 5 oder weniger aufrechterhalten wird.

8. Verfahren wie im Anspruch 7 beansprucht, wobei der pH im Bereich zwischen 0,23 und etwa 4,37 liegt.

9. Verfahren wie in irgendeinem der Ansprüche 1 oder 2 beansprucht, wobei, wenn das Metall Eisen umfaßt, ein pH von etwa 6,7 oder weniger aufrechterhalten wird, wobei der pH vorzugsweise im Bereich zwischen etwa 2,5 und etwa 4,5 liegt.

10. Verfahren wie in irgendeinem der vorangehenden Ansprüche beansprucht, wobei ein Puffer hinzugefügt wird.

11. Verfahren gemäß irgendeinem der vorangehenden Ansprüche, ferner mit einem anfänglichen oder gleichzeitigen Schritt des Umwandelns von COS im Gasstrom zu $H_2S$ mittels des Aussetzens des Gasstroms gegenüber einer Metallacetatlösung, die insbesondere aus der Gruppe ausgewählt wird, die aus Zinkacetat und Kupferacetat besteht.

12. Verfahren wie in irgendeinem der vorangehenden Ansprüche beansprucht, wobei Schwefelsäure bereitgestellt wird.

13. Ausrüstungssystem zum Ausführen des Verfahrens wie in irgendeinem der vorangehenden Ansprüche beansprucht, mit:

   - einer Schrubbersäule, in der der Gasstrom zum Reinigen mit einer Metallsulfatlösung in Kontakt gebracht werden kann,
   - einer Filtereinheit zum Abtrennen von präzipitiertem Metallsulfid, und
   - einer Regeneriereinheit, in der das Metallsulfid zu Metalloxid regeneriert werden kann.

**14.** System wie im Anspruch 13 beansprucht zum Bereitstellen von Schwefelsäure und/oder Schwefeldioxid.

**Revendications**

**1.** Procédé pour éliminer sélectivement le soufre et/ou des composés contaminants contenant du soufre d'un flux gazeux, qui peut également comprendre du $CO_2$, ledit procédé comprenant les étapes consistant à :

- placer le flux gazeux en contact avec une solution de sulfate métallique dans laquelle le métal est choisi parmi le cuivre, le zinc et le fer, à un pH situé dans le domaine compris entre environ -0,05 et environ 7,0, dans lequel la solution de sulfate métallique et les contaminants réagissent ensemble afin de former un sulfure métallique solide qui précipite et de l'acide sulfurique aqueux,
- éliminer le sulfure métallique solide de la solution de sulfate métallique en contact avec le flux gazeux,
- convertir le sulfure métallique solide en oxyde métallique,
- dissoudre l'oxyde métallique ainsi formé dans la solution de sulfate métallique/acide sulfurique obtenue à l'étape d'élimination ci-dessus afin de régénérer le sulfate métallique, et ensuite acheminer la solution résultante vers l'étape de mise en contact avec le flux gazeux.

**2.** Procédé selon la revendication 1, dans lequel le flux gazeux contient du $H_2S$ et/ou du COS.

**3.** Procédé selon la revendication 1 ou 2, dans lequel le sulfate métallique est le sulfate de cuivre.

**4.** Procédé selon la revendication 3, dans lequel le domaine de pH se situe environ entre 0,0 et 7,0, de préférence entre 0,25 et 7,0.

**5.** Procédé selon la revendication 4, dans lequel le domaine de pH se situe environ entre 0,25 et environ 6,0.

**6.** Procédé selon les revendications 1 à 5, dans lequel le pH de départ lors du placement initial du flux gazeux en contact avec le sulfate de cuivre aqueux est d'environ 4,0 ou supérieur.

**7.** Procédé selon l'une quelconque des revendications 1 ou 2, dans lequel, lorsque le métal comprend du zinc, on maintient un pH d'environ 6 ou inférieur, de préférence de 5 ou inférieur.

**8.** Procédé selon la revendication 7, dans lequel le pH se situe dans le domaine compris entre 0,23 et environ 4,37.

**9.** Procédé selon l'une quelconque des revendications 1 ou 2, dans lequel, lorsque le métal comprend du fer, on maintient un pH d'environ 6,7 ou inférieur, le pH se situant de préférence dans le domaine compris entre environ 2,5 et environ 4,5.

**10.** Procédé selon l'une quelconque des revendications précédentes, dans lequel un tampon est ajouté.

**11.** Procédé selon l'une quelconque des revendications précédentes, comprenant en outre une étape initiale ou simultanée consistant à transformer le COS dans le flux gazeux en $H_2S$, au moyen d'une exposition du flux gazeux à une solution d'acétate métallique, qui est en particulier choisi dans le groupe constitué de l'acétate de zinc et de l'acétate de cuivre.

**12.** Procédé selon l'une quelconque des revendications précédentes, dans lequel de l'acide sulfurique est fourni.

**13.** Système d'équipement pour réaliser le procédé selon l'une quelconque des revendications précédentes, comprenant :

- une colonne de lavage dans laquelle le flux gazeux peut être amené en contact avec une solution de sulfate métallique à des fins de nettoyage,
- une unité formant filtre pour séparer le sulfure métallique précipité, et
- une unité de régénération dans laquelle le sulfure métallique peut être régénéré en oxyde métallique.

**14.** Système selon la revendication 13, pour fournir de l'acide sulfurique et/ou du dioxyde de soufre.

FIG.1   ΔG$_r$ vs. pH ¡precipitation reactions of zinc and copper

FIG.2   ΔG$_r$ vs. pH precipitation reactions of iron

FIG. 3

5% H$_2$S
10% CO$_2$
85% N$_2$

## FIG.4

H$_2$S conversion as a function of time

Hydrogen sulfide conversion

H$_2$S conversion

Time (min)

## FIG. 5

FIG.6

FIG.7

FIG. 8

FIG. 9

H₂S & CO₂ conversion as a function of time

FIG. 10

FIG. 11

FIG. 12

FIG. 13